# FASCICULE DE BREVET EUROPEEN

(11) **EP 2 561 110 B1**
(45) Date de publication et mention de la délivrance du brevet: **28.06.2017**
(21) Numéro de dépôt: 11715553.1
(22) Date de dépôt: 21.04.2011
(51) Int. Cl.: C23C 4/00, C23C 28/00

(54) **PROCÉDÉ DE PRÉPARATION D'UN REVÊTEMENT MULTICOUCHE SUR UNE SURFACE D'UN SUBSTRAT PAR PROJECTION THERMIQUE**
VERFAHREN ZUM HERSTELLEN EINER MEHRLAGIGE BESCHICHTUNG MITTELS EINER THERMISCHEN SPRITZMETHODE
THERMAL SPRAY METHOD FOR THE APPLICATION OF A MULTILAYER COATING ON A SUBSTRATE

(30) Priorité: 23.04.2010 FR 1053144
(43) Date de publication de la demande: 27.02.2013
(73) Titulaire: Commissariat à l'Énergie Atomique et aux Énergies Alternatives, 75015 Paris (FR); Centre National de la Recherche Scientifique, 75016 Paris (FR); Université de Limoges, 87032 Limoges (FR)
(72) Inventeur: MEILLOT, Erick, F-37260 Monts (FR); VERT, Romain, F-87170 Isle (FR); TOULC'HOAT, Joël, F-37300 Joue-Les-Tours (FR); MARIAUX, Gilles, F-87700 Beynac (FR); VARDELLE, Armelle, F-87590 Saint-Just-Le-Martel (FR)
(74) Mandataire: Ilgart, Jean-Christophe
(86) Numéro de dépôt international: PCT/EP2011/056431
(87) Numéro de publication internationale: WO 2011/131757

(56) Documents cités:
- WO-A1-00/00660
- WO-A1-2006/043006
- US-A1- 2004 131 865

## Description

### DOMAINE TECHNIQUE

L'invention concerne un procédé de préparation d'un revêtement sur une surface d'un substrat par au moins un procédé de projection thermique tel que décrit dans la revendication 1. Plus précisément l'invention a trait à un procédé de préparation d'un revêtement multicouche adhérent sur une surface d'un substrat par au moins un procédé de projection thermique.

L'invention s'applique en particulier à la préparation d'un revêtement en céramique(s) épais sur un substrat métallique.

Le domaine technique de l'invention peut être défini de manière générale comme celui de la préparation, fabrication de revêtement par projection thermique.

### ÉTAT DE LA TECHNIQUE ANTÉRIEURE

La projection thermique fait partie des techniques de traitement de surface par voie sèche. Cette technique permet de réaliser des revêtements épais, généralement d'une épaisseur de quelques dizaines de micromètres à quelques centaines voire milliers de micromètres, de natures très variées sur des substrats ou pièces à revêtir tout aussi variés.

Tous les systèmes de projection thermique utilisent un dispositif de chauffage dans lequel est introduit un gaz, dit gaz de projection, servant à accélérer, chauffer et transporter jusqu'à la pièce à revêtir de fines particules, qui ont typiquement une dimension micrométrique, c'est-à-dire généralement une dimension de 5 à 100 micromètres. Ces fines particules, solides à l'état initial, peuvent être à l'état liquide, semi-fondu, voire solide, après passage dans le gaz de projection.

Ces particules sont injectées dans le gaz de projection à l'aide d'un gaz vecteur, dit gaz porteur. L'utilisateur doit faire coïncider la quantité de mouvement du gaz porteur et des particules avec celle du gaz de projection pour permettre aux particules de bien pénétrer dans le gaz de projection.

Le gaz de projection, porté à haute température, est ainsi une source enthalpique et cinétique qui permet de chauffer les particules jusqu'à leur point de fusion ou au-delà, et de leur communiquer une certaine vitesse.

Dans ce qui suit, on appellera procédés par « voie classique » ou plus simplement procédés « classiques », les procédés de projection thermique par voie sèche qui utilisent des poudres micrométriques sèches par opposition aux procédés par « voie liquide » décrits plus bas qui mettent en oeuvre des suspensions de particules nanométriques ou des solutions de précurseurs de ces particules.

Les particules projetées sur le substrat s'écrasent et s'étalent de multiples façons selon leur vitesse, leur état de fusion, leur température, etc....

L'accumulation des particules sur le substrat permet de réaliser le revêtement par empilement de ces particules.

Il existe de nombreuses manières de réaliser un dépôt par projection thermique mais les procédés les plus couramment utilisés dans l'industrie sont la projection flamme-poudre, la projection arc-fil, la projection supersonique ou hypersonique dénommée « HVOF » c'est-à-dire « High Velocity Oxy-Fuel » ou « HVAF » c'est-à-dire « High Velocity Air Fuel », et la projection par plasma (en arc soufflé ou radio-fréquence).

Une description de ces procédés est réalisée dans le document [1] et dans le document [2].

Toutes sortes de substrats peuvent ainsi être pourvus d'un revêtement et acquérir une fonction renforcée lors de leur utilisation.

Par exemple, ces substrats pourront être pourvus d'une couche faisant office de barrière thermique, ou de barrière anti-corrosion, d'une couche anti-usure etc., ou encore d'une couche leur communiquant des propriétés de stabilité thermique, de dureté, etc.

Mais de nombreux problèmes subsistent liés notamment à une incompatibilité entre certaines techniques de projection thermique et les caractéristiques de la pièce à revêtir, ou bien entre le matériau d'apport destiné à constituer le revêtement et la pièce à revêtir.

Ainsi, certains procédés de projection thermique ne permettent pas le revêtement de pièces mécaniquement fragiles, dont la sensibilité thermique est importante, ou de pièces de forme complexe présentant des zones inaccessibles.

Avec le matériau d'apport, se posent des problèmes de mouillabilité, d'adhérence, et de dilatation différentielle avec le matériau qui constitue la pièce à revêtir.

L'une des propriétés fondamentales que doivent présenter les revêtements réalisés par projection thermique est l'adhérence de ces revêtements à la surface de la pièce à revêtir encore appelée subjectile.

Différents mécanismes d'adhésion ont été mis en évidence, ces mécanismes sont les suivantes :
- l'ancrage mécanique : il est généralement dû à la contraction du matériau projeté dans les aspérités du subjectile ;
- l'adsorption : Il s'agit d'une adhésion que l'on peut généralement qualifier d'adhésion "chimique" qui peut aller de la chimisorption due aux forces de Van der Waals jusqu'à la physisorption due à des dipôles permanents.
- l'adhésion électrostatique : elle est provoquée par une double couche de charges de signe opposé à l'interface.
- la diffusion : il peut s'agir d'une diffusion moléculaire dans le cas des polymères, ou d'une diffusion atomique dans le cas des alliages, au voisinage de l'interface.

Plusieurs études ont montré que le mécanisme prépondérant en projection thermique est l'ancrage mécanique des particules projetées sur les aspérités présentes à la surface du subjectile.

Pour obtenir une adhésion mécanique accrue, différentes méthodes de préparation de surface sont utilisées, la plus courante étant le grenaillage avec différents matériaux abrasifs tels que le sable, le corindon et la glace comme cela est décrit dans les documents [5] et [6].

Cependant, lors de l'impact du matériau abrasif sur la surface, des résidus restent ancrés dans la surface et sont sources de pollution. C'est la raison pour laquelle la technique de l'ablation par jet d'eau à haute pression a été développée. Cette technique, qui permet de modifier la rugosité de la surface du substrat, subjectile sans y incorporer de résidus d'abrasif est notamment décrite dans les documents [7] et [8].

Cependant, outre les phénomènes éventuels de contamination de surface, les techniques de préparation de surface mentionnées plus haut nécessitent l'utilisation de pressions élevées et induisent donc, suivant les cas, des contraintes de compression ou de traction, pouvant atteindre 400 MPa sur la surface du subjectile. Ces contraintes peuvent dans le cas de substrats de faibles épaisseurs, engendrer des déformations non négligeables.

Afin de ne pas déformer les substrats par des contraintes mécaniques, d'autres techniques de préparation de surface ont été développées.

Ainsi, les documents [10] et [11] proposent l'utilisation d'une irradiation laser pouvant entraîner une élimination totale ou partielle du film contaminant superficiel et une modification de la morphologie de la surface du subjectile.

Le document [12] mentionne l'utilisation de décharges électriques entre une électrode et le substrat afin de supprimer les couches d'oxydes et créer de la rugosité.

Différentes études, exposées dans les documents [13], [14], et [15] montrent l'influence d'autres mécanismes d'adhérence que l'ancrage mécanique, relativement complexes et non maîtrisés.

Il apparaît que l'utilisation des techniques mentionnées plus haut, dites d'activation de surface, est difficilement envisageable industriellement pour la préparation d'une surface préalablement à une projection thermique du fait de leur coût financier élevé.

En résumé, les techniques industrielles ou expérimentales d'activation ou de préparation de surface décrites ci-dessus, qui ont pour but d'améliorer l'adhérence de revêtements préparées par projection thermique présentent soit l'inconvénient d'un coût financier élevé, soit l'inconvénient de générer des contraintes mécaniques dans le substrat à revêtir.

Il existe donc un besoin pour un procédé de préparation d'un revêtement microstructuré sur un substrat par un procédé de projection thermique par voie sèche, classique, qui permette d'obtenir un revêtement ayant des propriétés d'adhérence excellente, améliorées, sans avoir recours à une préparation ou activation de la surface du substrat autre qu'un simple nettoyage.

Au début des années 1990, une nouvelle technique de projection thermique a vu le jour, à savoir la projection de nanomatériaux par « voie liquide », dite projection de suspension.

On remplace le gaz porteur et les particules micrométriques de la projection thermique classique par une suspension, dispersion ou mélange d'un liquide et de particules nanométriques.

En effet, dans le procédé de projection thermique classique, par voie sèche, les particules doivent avoir une quantité de mouvement suffisante pour favoriser leur pénétration dans le gaz de projection et permettre ainsi un traitement thermique adéquat de ces particules.

Or, les particules nanométriques, du fait leur faible masse, ne peuvent atteindre des quantités de mouvement suffisantes, à moins d'augmenter de façon très importante le débit de gaz porteur, ce qui a comme conséquence des déviations importantes du gaz de projection, rendant impossible toute construction du dépôt.

En utilisant une suspension, la mise en oeuvre de particules nanométriques, qui n'étaient pas possible avec le procédé « classique » par voie sèche devient possible.

En effet, au contact du gaz de projection, le jet de particules en suspension va se fragmenter, et le liquide va s'évaporer, les particules vont donc pouvoir être traitées thermiquement et accélérées vers la pièce à revêtir, pour ainsi former un revêtement finement structuré, comme cela est décrit dans le document [16].

Le document [17] décrit un système permettant de réaliser des dépôts par projection plasma â partir de nanoparticules en suspension.

La projection thermique de suspensions fait également l'objet des documents [18], [19], et [20].

Des études complémentaires ont déterminé les paramètres du procédé qui influencent la construction du dépôt ([21], [22]) et la cohésion possible avec le substrat ([23], [24], [25]).

Les couches nanostructurées présentent des propriétés optimisées, tant mécaniques que physico-chimiques. En effet, une diminution de la taille des particules permet d'augmenter fortement leur surface spécifique, le nombre de contacts interparticulaires ainsi que la forme, la taille et la géométrie des porosités.

Du fait de la diminution de la taille des particules utilisées dans le procédé de projection thermique de suspension, de nouveaux phénomènes sont à prendre en compte.

Ainsi, l'accrochage mécanique nécessite des aspérités de surface d'une taille nettement plus faibles, à savoir de tailles submicroniques voire nanométriques, et de nouveaux mécanismes d'adhérence apparaissent, tels que les forces de Van der Waals ou les forces électrostatiques.

Les revêtements préparés par projection thermique de suspensions ne nécessitent donc pas de préparation de surface préalable particulière.

Le document [26] montre qu'il est possible de réaliser des dépôts à propriétés optimisées et d'épaisseur non négligeable (100 µm). Cependant, une augmentation trop importante de l'épaisseur du dépôt nanostructuré peut entraîner sa décohérence [27].

La projection thermique de suspensions se trouve donc limitée à la réalisation de couches dites «minces», à savoir d'une épaisseur généralement inférieure à 150 µm.

Les procédés de projection thermique par voie liquide permettent donc la préparation de couches adhérentes, mais il s'agit uniquement de couches nanostructurées ou finement structurées et non microstructurées qui sont peu épaisses.

Le besoin, déjà mentionné plus haut, pour un procédé de préparation d'un revêtement microstructuré sur un substrat par un procédé de projection thermique qui permette d'obtenir un revêtement ayant des propriétés d'adhérence excellente, améliorées, sans avoir recours à une préparation ou activation de la surface du substrat autre qu'un simple nettoyage, demeure donc entier.

En d'autres termes, il existe donc, au regard de ce qui précède, un besoin pour un procédé de préparation d'un revêtement sur un substrat par projection thermique, qui ne présente pas les inconvénients, défauts, limitations et désavantages des procédés de l'art antérieur tels que les procédés classiques par voie sèche et qui résolve les problèmes de ces procédés.

Le but de la présente invention est de fournir un tel procédé qui réponde entre autres à ce besoin.

### EXPOSÉ DE L'INVENTION

Ce but, et d'autres encore, sont atteints, conformément à l'invention, par un procédé de préparation d'un revêtement multicouche sur une surface d'un substrat par au moins un procédé de projection thermique, dans lequel on réalise les étapes successives suivantes :
a) on dépose sur la surface du substrat une première couche nanostructurée ou finement structurée d'un premier matériau par un procédé de projection thermique par voie liquide ; la surface du substrat n'ayant subi, préalablement au dépôt de la première couche nanostructurée ou finement structurée, aucun traitement de préparation ou d'activation autre qu'un traitement de nettoyage éventuel ;
b) on dépose sur la première couche nanostructurée ou finement structurée une deuxième couche microstructurée d'un deuxième matériau par un procédé de projection thermique.

Par nettoyage, on entend aussi dégraissage. Le revêtement est un revêtement épais.

Par revêtement épais, au sens de l'invention, on entend généralement que le revêtement a une épaisseur supérieure ou égale à 100 µm, de préférence supérieure ou égale à 150 µm.

L'épaisseur du revêtement, qui est généralement supérieure ou égale à 100 µm, de préférence supérieure ou égale à 150 µm, peut aller généralement jusqu'à 1 mm voire 10 mm, et cette épaisseur est équivalente à celle d'un dépôt obtenu par un procédé de projection classique dans lequel on réalise une préparation, activation de la surface par exemple par sablage mécanique.

Autrement dit, dans le procédé selon l'invention, on réalise généralement un dépôt d'un revêtement « épais » d'une épaisseur que l'on peut qualifier de classique, à la différence que l'on ne réalise aucune préparation de la surface du substrat pour en augmenter la rugosité, et que pour conserver une bonne adhérence on commence par déposer une première couche nanostructurée ou finement structurée par voie liquide.

Le procédé de projection thermique mis en oeuvre dans l'étape b) peut être un procédé quelconque.

Cependant, avantageusement, le procédé de projection thermique de l'étape b) peut être un procédé de projection thermique par voie sèche.

Avantageusement, lors de l'étape a), le procédé de projection thermique peut utiliser une suspension de particules nanométriques ou submicroniques du premier matériau.

Par particules nanométriques, on entend généralement que ces particules ont une taille, généralement définie par leur plus grande dimension, de 1 à 100 nm.

Par particules submicroniques, on entend généralement que ces particules ont une taille, généralement définie par leur plus grande dimension, de plus de 100 nm à 1000 nm.

Ces particules nanométriques ou submicroniques dont la taille se situe donc généralement dans le domaine de la centaine de nanomètres ne peuvent être projetées par un procédé classique par voie sèche, mais seulement par un procédé par voie liquide.

Ces particules nanométriques ou submicroniques sont ensuite traitées, moyennant quoi les particules nanométriques ou submicroniques forment la première couche nanostructurée ou finement structurée du premier matériau sur la surface du substrat.

Ou bien, lors de l'étape a), le procédé de projection thermique utilise une solution de réactifs précurseurs du premier matériau.

Cette solution de réactifs précurseurs est ensuite traitée par une source enthalpique, moyennant quoi les réactifs précurseurs réagissent et forment la première couche nanostructurée ou finement structurée du premier matériau sur la surface du substrat.

Avantageusement, l'épaisseur de la première couche nanostructurée ou finement structurée du premier matériau déposée sur la surface du substrat, peut être supérieure à l'épaisseur de ladite première couche dans le revêtement multicouche final obtenu à l'issue du procédé.

Avantageusement, lors de l'étape b) le procédé de projection thermique utilise une poudre sèche de particules microniques, micrométriques, du deuxième matériau, et ces particules microniques sont ensuite traitées, moyennant quoi les particules microniques forment la deuxième couche microstructurée du deuxième matériau sur la première couche. Le deuxième matériau a la même composition que le premier matériau (en d'autres termes, le premier matériau et le deuxième matériau sont les mêmes) et/ou le deuxième matériau a une structure cristallographique proche de celle du premier matériau, et/ou le deuxième matériau a un comportement thermomécanique proche de celui du premier matériau.

En d'autres termes, avantageusement, la couche nanostructurée a la même composition (chimique) que la couche microstructurée.

Autrement dit, avantageusement, la couche nanostructurée et la couche microstructurée sont en un même matériau et se différencient par le fait que l'une présente une nanostructure tandis que l'autre présente une microstructure.

Avantageusement, après l'étape b) on réalise une étape c) au cours de laquelle on dépose une troisième couche microstructurée ou nanostructurée ou finement structurée d'un troisième matériau sur la deuxième couche microstructurée du deuxième matériau par un procédé de projection thermique.

Le procédé de projection thermique pour le dépôt de la troisième couche peut être un procédé de projection thermique par voie sèche ou par voie liquide.

La troisième couche peut être en effet microstructurée ou nanostructurée ou finement structurée en fonction de l'application visée. Ainsi, une troisième couche nanostructurée ou finement structurée est-elle préférée, par exemple, dans le cas où l'on souhaite conférer une étanchéité au revêtement.

Les deuxième et troisième couches des étapes b) et c) peuvent avoir des fonctions différentes.

Avantageusement, le troisième matériau a la même composition que le deuxième matériau (en d'autres termes, le troisième matériau et le deuxième matériau sont les mêmes) et/ou le troisième matériau a une structure cristallographique proche de celle du deuxième matériau, et/ou le troisième matériau a un comportement thermomécanique proche de celui du deuxième matériau.

En d'autres termes, avantageusement, la troisième couche a la même composition (chimique) que la deuxième couche.

Autrement dit, avantageusement, la troisième couche et la deuxième couche sont en un même matériau.

Avantageusement, le procédé de projection thermique par voie liquide utilisé dans l'étape a) est choisi parmi les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence.

Avantageusement, le procédé de projection thermique utilisé dans l'étape b) est un procédé de projection thermique par voie sèche choisi parmi les procédés utilisés pour l'étape a), à savoir les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence ; et, en outre, parmi le procédé de projection flamme-poudre, et le procédé de projection arc-fil.

Avantageusement, le procédé de projection thermique utilisé dans l'étape c) est soit un procédé de projection thermique par voie liquide choisi parmi les procédés de projection thermique par voie liquide utilisés pour l'étape a), à savoir les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence, dans le cas où la couche déposée lors de l'étape c) est une couche nanostructurée ou finement structurée ; ou bien un procédé de projection thermique par voie sèche choisi parmi les procédés de projection thermique par voie sèche utilisés pour l'étape b), à savoir les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence, et, en outre, parmi le procédé de projection flamme-poudre, et le procédé de projection arc-fil dans le cas où la couche déposée lors de l'étape c) est une couche microstructurée.

Avantageusement, préalablement à l'étape a), on préchauffe le substrat et/ou préalablement à l'étape b) on préchauffe la première couche. Les premier, deuxième et éventuellement le troisième matériaux sont choisis indépendamment les uns des autres parmi les céramiques, de préférence les céramiques oxydes, les métaux, et les cermets.

Avantageusement les premier et deuxième matériaux, et éventuellement le troisième matériau, sont une même céramique, de préférence une céramique oxyde, telle que la zircone stabilisée à l'yttrine, YSZ. Le substrat est en un matériau choisi parmi les métaux et les alliages métalliques.

Ces alliages métalliques peuvent être notamment choisis parmi les aciers, de préférence parmi les aciers inoxydables.

Avantageusement, le premier et le deuxième matériau, et éventuellement le troisième matériau, sont une même céramique, de préférence une même céramique oxyde, telle que la zircone stabilisée à l'yttrine (YSZ), et le substrat est un substrat en un métal ou en un alliage métallique, de préférence un substrat en acier, par exemple un substrat en acier inoxydable.

Le procédé selon l'invention présente une suite spécifique d'étapes spécifiques qui n'a jamais été décrite ni suggérée dans l'art antérieur, représentée notamment par les documents cités plus haut.

Le procédé selon l'invention peut être défini comme un procédé dans lequel on prépare une première couche nanostructurée ou finement structurée par projection thermique, généralement par projection thermique par voie liquide, et on utilise cette couche nanostructurée ou finement structurée comme couche d'adhérence pour une couche microstructurée également préparée par projection thermique, généralement par projection thermique classique, par voie sèche. On obtient finalement un revêtement globalement préparé par projection thermique et présentant une adhérence excellente sur le substrat.

De manière étonnante, on obtient de cette manière, grâce au procédé selon l'invention, une excellente adhérence de la couche microstructurée sur le substrat, non préalablement préparé, alors même que jusqu'alors, il était nécessaire pour obtenir une telle adhérence d'avoir recours à un ancrage mécanique de cette couche microstructurée sur le substrat.

Notamment, il n'est généralement plus nécessaire, avec le procédé selon l'invention de réaliser une préparation préalable de la surface du substrat, telle qu'un sablage, afin d'augmenter la rugosité de surface pour favoriser un ancrage mécanique d'un revêtement et en particulier d'un revêtement épais.

Plus généralement, il n'est pas nécessaire avec le procédé selon l'invention de mettre en oeuvre une préparation ou activation préalable de la surface du substrat quelle qu'elle soit. Autrement dit, il n'y a pas, dans le procédé selon l'invention, de modification de l'état de surface de la pièce, substrat à revêtir préalablement au dépôt de la première couche.

Le procédé selon l'invention permet de préparer des revêtements, et notamment des revêtements épais, présentant une excellente adhérence sur des substrats par projection thermique, sans avoir recours à une préparation ou activation de surface, autre qu'un simple nettoyage de la surface du substrat.

En obtenant une excellente adhérence d'une couche microstructurée et d'un revêtement, en particulier d'un revêtement épais, préparé par projection thermique sur un substrat, bien que, de manière surprenante, un traitement de préparation ou d'activation du substrat ne soit pas préalablement réalisé, le procédé selon l'invention va à l'encontre du préjugé selon lequel une préparation ou activation de la surface du substrat était nécessaire pour obtenir l'adhérence de telles couches microstructurées et de tels revêtements en particulier de tels revêtements épais sur un substrat.

Les revêtements préparés par le procédé selon l'invention dont l'adhérence est améliorée par rapport aux revêtements microstructurés préparés sur des substrats ayant subi une activation ou une préparation de surface ne présentent pas, en outre, tous les inconvénients liés à ces traitements de préparation et d'activation de la surface du substrat notamment en termes de coût financier et de contraintes mécaniques.

En résumé, le procédé selon l'invention permet pour la première fois de préparer un revêtement épais et adhérent sur une surface d'un substrat par un procédé de projection thermique sans préparation ou activation d'aucune sorte de cette surface si ce n'est un simple nettoyage. Le procédé selon l'invention s'affranchit donc de tous les problèmes d'adhérence liés à la nature et/ou à la rugosité des surfaces à revêtir, il est d'application très générale et assure une excellente adhérence du revêtement quels que soient la nature de la surface du substrat, l'état de cette surface définie notamment par sa rugosité, la forme, la géométrie de cette surface, même complexe, et la taille de cette surface.

Le procédé selon l'invention ne présente pas les inconvénients des procédés de l'art antérieur et surmonte les problèmes des procédés de l'art antérieur. En effet, il ne présente pas les inconvénients des procédés de préparation de revêtements par les procédés classiques par voie sèche en ce sens qu'il assure une excellente adhérence du revêtement, essentiellement microstructuré, sur le substrat sans activation ni préparation préalable.

Par rapport aux procédés de préparation par voie liquide par projection de suspension, le procédé selon l'invention permet de préparer des revêtements épais et cohérents ce qui n'était pas possible avec ce type de procédé.

En d'autres termes, le procédé selon l'invention consiste entre autres :
- à créer un revêtement, en particulier un revêtement en céramique d'épaisseur adaptée aux besoins industriels fortement adhérent sur une pièce en particulier une pièce métallique ;
- à créer un revêtement, en particulier un revêtement céramique sans préparation de surface préalable ;
- à se servir d'une couche nanostructurée ou finement structurée fortement adhérente en sous couche d'un dépôt, de préférence d'un dépôt « classique » microstructuré, pour créer ainsi une adhérence via un système multicouche.

Le procédé selon l'invention permet entre autres :
- de maîtriser l'épaisseur du revêtement final qui peut aller de quelques centaines de nanomètres à quelques millimètres, par exemple de 1 mm à 5 mm.
- de pouvoir réaliser des revêtements sur des pièces de formes complexes et de tailles diverses.

Le procédé selon l'invention peut être industrialisé rapidement et avec un moindre coût de production que les procédés de l'art antérieur.

On peut noter que des couches nanostructurées ou finement structurées préparées par projection thermique, n'ont jamais été utilisées comme couches de préparation de surface et d'accrochage préalables à une couche « classique » microstructurée préparée aussi par projection thermique.

Selon l'invention, il a été mis en évidence que ces couches nanostructurées qui permettent, par l'intermédiaire d'un système multicouche, d'optimiser l'adhérence d'un revêtement plus ou moins épais sur une surface n'ayant pas été préalablement préparée et donc de simplifier les procédures de projection.

L'utilisation de systèmes bi, voire multicouche, pour optimiser l'adhérence, avec une préparation de surface préalable, a certes, déjà fait l'objet de diverses études, notamment dans l'aéronautique et l'aérospatiale comme l'indique le document [28].

Mais cette utilisation se limite à des systèmes utilisant des sous-couches métalliques microstructurées, par exemple de type NiCrA1Y. En outre, ces couches microstructurées sont réalisées, avec un sablage initial, par des procédés de projection qui ne sont pas des procédés de projection par voie liquide faisant appel à la projection de suspensions ou de solutions.

En effet, les problèmes d'adhérence d'une céramique sur un métal ne sont pas nouveaux et sont en grande partie dus aux contraintes issues des différences de coefficient de dilatation thermique entre le substrat et le revêtement.

Pour cela, l'utilisation de système multi couche, avec une sous-couche métallique de type NiCrAIY, permet de créer un gradient de coefficient de dilatation thermique entre le substrat et la dernière couche fonctionnelle du revêtement, et ainsi de limiter ces contraintes mécaniques [32], [33] [34], [35], [36], [37]. Néanmoins l'adhérence est toujours d'origine mécanique et les substrats nécessitent toujours une préparation afin d'avoir la forte rugosité nécessaire à l'adhérence de couches microstructurées de forte épaisseur [38], [39], [40], [41], [42].

Il est également possible de trouver diverses techniques de revêtement utilisant des systèmes multicouches nanostructurées pour favoriser l'adhérence [43], [44], [45]. Mais toutes ces techniques, telles que le dépôt physique en phase vapeur (« PVD »), le dépôt physique en phase vapeur à faisceau d'électrons (« EB-PVD »), le dépôt chimique en phase vapeur (« CVD »), et le dépôt chimique en phase vapeur assisté par plasma (« PECVD »), sont complexes et nécessitent une préparation de surface, par exemple une surface polie, un vide poussé (environ 10⁻⁵ mbar) [46] et ne sont applicables que pour des couches minces. II est donc indispensable d'avoir un équipement et un environnement spécifiques, ce qui conduit à limiter la taille et la forme des pièces à revêtir et augmente considérablement le coût de production.

Il est à noter que jusqu'à présent, la superposition d'une couche nanostructurée et d'une couche microstructurée, la couche nanostructurée jouant le rôle de couche d'accrochage d'une couche microstructurée, n'a jamais été réalisée afin d'améliorer l'adhérence tout en gardant de préférence la même composition chimique des deux couches.

L'invention sera mieux comprise à la lecture de la description détaillée qui suit faite notamment en liaison avec des modes de réalisation préférés du procédé de l'invention, cette description étant donnée à titre illustratif et non limitatif.

### BRÈVE DESCRIPTION DES DESSINS

La description détaillée est faite en référence aux dessins joints, dans lesquels :
- La Figure 1 est une vue schématique qui montre un dispositif de projection thermique pour la mise en oeuvre du procédé selon l'invention ;
- La Figure 2 est une vue schématique en coupe transversale d'un revêtement, système, bicouche préparé par le procédé selon l'invention, sur un substrat, subjectile ;
- La Figure 3 est une vue schématique en coupe verticale d'un revêtement, système, tricouche préparé par le procédé selon l'invention, sur un substrat, subjectile ;
- La Figure 4 est une image obtenue par microscopie électronique à balayage qui montre la microstructure obtenue dans l'exemple par le procédé selon l'invention.

### EXPOSÉ DÉTAILLÉ DE MODES DE RÉALISATION PARTICULIERS

Le procédé selon l'invention peut être décrit comme un procédé de préparation d'un revêtement, système multicouche, multimodal, par projection thermique sur une surface d'un substrat, aussi appelé subjectile, à revêtir. La projection thermique peut être réalisée sous atmosphère normale, contrôlée, par exemple inerte ou neutre, ou basse pression c'est-à-dire sous une pression de quelques millibars.

Par système multimodal, on entend que le revêtement, système comprend au moins deux couches qui sont différentes par leur structure, leur échelle structurale, et leur organisation. Ainsi, la première couche est une couche nanostructurée ou finement structurée, tandis que la deuxième couche est une couche microstructurée.

Par couche nanostructurée, ou finement structurée, on entend généralement que cette couche présente une organisation à l'échelle nanométrique, c'est-à-dire à une échelle allant de un ou quelques nanomètres jusqu'à une à quelques centaines de nanomètres. De même, par couche microstructurée, on entend que cette couche présente une organisation à l'échelle micrométrique, c'est-à-dire à une échelle allant de un ou quelques micromètres jusqu'à un à quelques centaines de micromètres.

Chacune des couches du procédé selon l'invention peut être déposée par un procédé de projection thermique différent et à l'aide d'un dispositif de projection thermique différent, mais il est avantageux de réaliser le dépôt de toutes les couches et notamment des première et deuxième couches avec le même procédé et le même dispositif de projection thermique.

Ce dispositif doit de préférence pouvoir être facilement adapté pour réaliser soit la projection de poudres micrométriques de matériaux, tels que des céramiques, par la voie classique ou voie sèche, soit la projection de suspensions de poudres microniques de matériaux tels que des céramiques, par la voie liquide, soit encore la projection de solutions de réactifs susceptibles de former après traitement par une source enthalpique, un dépôt nanostructuré ou finement structuré.

Le procédé de projection thermique mis en oeuvre par le dispositif peut être de quelque nature que ce soit et peut être notamment choisi parmi les procédés de projection thermique déjà mentionnés plus haut, à savoir la projection flamme-poudre, la projection arc-fil, la projection supersonique ou hypersonique dénommée « HVOF » c'est-à-dire « High Velocity Oxy-Fuel » ou « HVAF » c'est-à-dire « High Velocity Air Fuel », et la projection par plasma, suivant leur adaptabilité à la voie sèche et à la voie liquide.

Parmi ces procédés, l'homme du métier identifie facilement ceux qui peuvent être mis en oeuvre par voie sèche et ceux qui peuvent être mis en oeuvre par voie liquide.

Le choix du procédé de projection thermique dépend des températures de fusion du matériau à projeter et du matériau composant le subjectile, substrat à revêtir. Avantageusement, ce dispositif peut être placé sur un bras de robot afin de balayer l'intégralité de la surface du substrat, de la pièce à revêtir, pour ainsi uniformiser le revêtement multicouche.

La taille, la forme et la géométrie du substrat, de la pièce, du subjectile à revêtir par le procédé selon l'invention peuvent être quelconques. C'est là en effet, un des avantages du procédé selon l'invention que de permettre la préparation d'un revêtement adhérent sur toutes sortes de pièces quelles que soient leur forme, taille et géométrie, même complexes. En fait, la seule limite à laquelle peut se heurter la mise en oeuvre de l'invention réside dans les capacités mécaniques de positionnement du robot et n'est pas due aux caractéristiques du procédé en tant que tel.

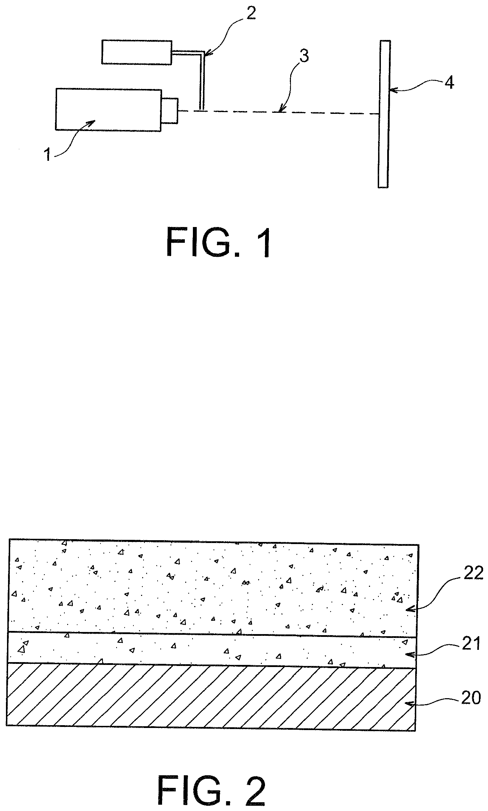

Un dispositif pour la mise en oeuvre du procédé selon l'invention est représenté sur la Figure 1 ; à des fins de simplification le bras de robot dont est généralement muni le dispositif a été omis sur la Figure 1.

Ce dispositif de projection thermique comprend tout d'abord un dispositif permettant l'injection et l'accélération des particules (1) qui joue également le rôle de source enthalpique.

Le dispositif (1) varie selon le procédé de projection thermique mis en oeuvre. On pourra à cet égard se référer aux documents [1], [2] ou [17].

Le dispositif de projection thermique comprend ensuite un système d'alimentation (2) des matériaux de revêtement qui peuvent se trouver soit sous la forme de poudres sèches dans le cas ou la voie classique ou voie sèche est utilisée, soit sous la forme de suspensions de ces poudres ou sous la forme de solutions de réactifs précurseurs dans le cas où la voie liquide est utilisée.

Sur la figure 1, on a également représenté la trajectoire (3) des particules fondues, semi-fondues ou solides en vol qui viennent se déposer sur le subjectile à revêtir (4).

Le subjectile (4) peut être en un matériau choisi parmi les métaux et les alliages métalliques tels que par exemple l'acier, les alliages à base de Nickel, tels que les alliages disponibles sous la dénomination Haynes^{®}, les inconels....

Préalablement au dépôt de la première couche d'un premier matériau sur la surface du substrat, subjectile, à revêtir, cette surface est généralement nettoyée, par exemple dégraissée avec un solvant, il s'agit là d'un procédé industriel classique.

Conformément au procédé selon l'invention, la surface du substrat ne subit aucun traitement d'activation ou de préparation autre que cet éventuel traitement de nettoyage, par exemple de dégraissage. Ce traitement de nettoyage n'affecte en aucune manière la structure ou la composition de la surface du substrat, autrement dit l'état de surface du substrat et a pour but d'éliminer des impuretés, polluants et autres corps étrangers à la surface du substrat qui sont distincts de celui-ci et n'en font pas partie.

La surface du substrat peut éventuellement être qualifiée de surface « lisse » et « propre ».

Cette surface n'offre pas la possibilité d'un ancrage mécanique à l'échelle d'une couche microstructurée.

Le substrat, subjectile peut être éventuellement préchauffé, préalablement au dépôt par tout moyen adéquat, à une température par exemple de 25 à 600°C.

La température de préchauffage dépend des propriétés des matériaux de revêtement et des substrats.

Cette étape de préchauffage permet une adhérence améliorée entre le subjectile (4) et la première couche du revêtement.

Suite à cette étape éventuelle de préchauffage, la surface du substrat, subjectile est revêtue d'une première couche nanostructurée ou finement structurée d'un premier matériau par un procédé de projection thermique par voie liquide.

Le procédé par voie liquide qui est mis en oeuvre pour le dépôt de la première couche du revêtement peut utiliser des particules nanométriques (nanoparticules), voire submicroniques du premier matériau, en suspension, qui sont ensuite traitées de manière connue, suivant le procédé de projection choisi, et forment la première couche nanostructurée ou finement structurée (21) en surface du subjectile (20), comme cela est montré sur la figure 2.

Tout procédé de projection susceptible de projeter des poudres nanométriques en suspension peut être utilisé pour le dépôt de la première couche ou couche d'accrochage.

Le procédé Prosol^{®} qui est décrit notamment dans la demande de brevet [17], à la description de laquelle on pourra se référer, est un procédé susceptible de convenir au dépôt de la première couche nanostructurée ou finement structurée.

Les nanoparticules ou particules nanométriques ont généralement une taille de 1 à 500 nm, de préférence de 1 à 100 nm, de préférence encore de 1 à 50 nm.

Les particules submicroniques ont généralement une taille de 200 nm à 1 µm, de préférence de 200 à 800 nm. Ou bien, le procédé qui est mis en oeuvre pour le dépôt de la première couche utilise une solution de réactifs précurseurs du premier matériau qui est traitée de manière connue par une source enthalpique, propre au procédé, et peut réagir et former un dépôt (21) également nanostructuré en surface du subjectile (20) de même composition que le premier matériau déposé par projection d'une suspension.

Les paramètres de projection seront adaptés au premier matériau à projeter.

Le premier matériau qui constitue la première couche (21) du revêtement préparé par le procédé selon l'invention est généralement choisi parmi les céramiques, de préférence parmi les oxyde(s) métalliques, tels que la zircone, l'alumine, la silice, l'oxyde d'hafnium (hafnine), le dioxyde de titane, etc.

Dans le cas où l'on utilise une solution de réactifs précurseurs du premier matériau, les réactifs sont généralement choisis parmi les sels de métaux et les alcoxydes métalliques.

Lors de la préparation de la première couche (21) ou couche de liaison, l'atmosphère de projection ou plus précisément, l'atmosphère dans laquelle est réalisée la projection n'est pas forcément oxydante car l'oxydation des particules en vol n'est pas nécessaire.

La première couche nanostructurée ou finement structurée (21) du premier matériau, est fortement adhérente, et sert de couche de liaison et d'accrochage aux couches supérieures et en premier lieu à la deuxième couche constituée par un deuxième matériau.

Cette première couche pourra ainsi être dénommée « couche nanostructurée de liaison» (21).

Cette première couche présente une nanostructuration c'est-à-dire qu'elle est structurée à l'échelle nanométrique. Ainsi, si l'on projette par exemple des particules sphériques ayant par exemple un diamètre de 500 nm, ces particules lors de leur impact sur le subjectile vont s'écraser, s'aplatir pour donner des lamelles d'une épaisseur de 20 à 30 nm. On va donc obtenir une couche constituée par un empilement de ces fines lamelles qui se recouvrent pour former un dépôt finement structuré avec une nanoporosité ou porosité à l'échelle nanométrique.

L'épaisseur de cette première couche (21) dépend du matériau à projeter. Cette épaisseur peut aller généralement de un à quelques µm jusqu'à moins de 150 µm (en termes d'épaisseur déposée).

En d'autres termes, l'épaisseur de la première couche peut aller jusqu'à 150 µm, la valeur 150 µm étant exclue.

En effet, il est préférable que l'épaisseur de la première couche (21) qui est une couche nanostructurée ou finement structurée, soit inférieure à 150 µm, car pour des épaisseurs plus importantes la cohérence de cette couche n'est pas assurée.

De préférence, l'épaisseur déposée de la première couche (21) est de 1 µm à 100 µm.

Avantageusement, cette première couche (21) peut avoir une épaisseur supérieure à son épaisseur nominale de fonction (c'est-à-dire son épaisseur dans le revêtement final multicouche obtenu à l'issue du dépôt de toutes les couches), un phénomène d'ablation pouvant survenir avec la réalisation de la deuxième couche.

Ainsi, si l'on souhaite que l'épaisseur nominale de fonction de la première couche soit de 1 à 100 µm, l'épaisseur de la couche initialement déposée, avant dépôt de la deuxième couche peut être de 1 à 150 µm.

Suite au dépôt sur la surface du substrat de la première couche (21) du premier matériau, on effectue le dépôt sur cette première couche, d'une deuxième couche microstructurée (22) d'un deuxième matériau par un procédé de projection thermique.

Aucune préparation, activation de la première couche n'est requise avant de procéder au dépôt de la deuxième couche.

La première couche (21), peut être éventuellement préchauffée, préalablement au dépôt de la deuxième couche (22), par tout moyen adéquat, à une température par exemple de 25 à 600°C.

Cette étape de préchauffage permet une adhérence améliorée entre la première couche et la deuxième couche du revêtement, notamment lorsqu'il s'agit de deux couches en céramiques.

Tout procédé de projection thermique permettant la préparation d'une couche microstructurée peut être utilisé.

Cette deuxième couche microstructurée est généralement déposée par un procédé de projection thermique « classique » par voie sèche.

Le procédé de projection qui est mis en oeuvre pour le dépôt de la deuxième couche du revêtement utilise une poudre sèche de particules micrométriques du deuxième matériau, qui sont projetées sur la surface du subjectile, et forment de manière connue la deuxième couche microstructurée (22) en surface de la première couche nanostructurée ou finement structurée (21).

Les particules micrométriques ou microparticules ont généralement une taille de 5 à 150 µm, de préférence de 10 à 20 µm, ou bien de 20 à 60 µm suivant le type de procédé utilisé.

Le deuxième matériau qui constitue la deuxième couche (22) microstructurée a généralement la même composition que le premier matériau, ou le deuxième matériau a une structure cristallographique proche de celle du premier matériau, ou le deuxième matériau a un comportement thermomécanique proche de celui du premier matériau. En choisissant ainsi le premier matériau de la couche (21) nanométrique ou finement structurée et le deuxième matériau de la couche (22) micrométrique, on assure un maximum de cohésion entre les deux couches.

En d'autres termes, selon l'invention on utilise de préférence le même matériau pour la couche de liaison (21) et pour la couche supérieure (22).

Les matériaux de ces couches sont donc, de préférence, identiques.

Cette homogénéité dans la composition des différentes couches est un des avantages supplémentaires procuré par le procédé selon l'invention dans ce mode de réalisation préféré.

Du fait, avantageusement de l'homogénéité de composition des couches, la maîtrise de la cohésion des couches ne nécessite pas la maîtrise de l'oxydation notamment à la surface de la couche de liaison (21).

En d'autres termes, il n'existe pas de problème d'oxydation à l'interface entre les couches lorsque, avantageusement, les deux couches sont de composition identique.

Lorsque le matériau de la première couche a avantageusement la même composition que le matériau de la deuxième couche, il n'existe pas de gradient de composition dans le revêtement.

Le deuxième matériau qui constitue la deuxième couche du revêtement préparé par le procédé selon l'invention est, de même que le premier matériau, généralement choisi parmi les céramiques, de préférence parmi les oxyde(s) métalliques, tels que la zircone, l'alumine, la silice, l'oxyde d'hafnium (hafnine), le dioxyde de titane, etc., ces particules peuvent être denses ou poreuses.

Les paramètres de projection du procédé de projection thermique mis en oeuvre pour le dépôt de la deuxième couche seront également adaptés au deuxième matériau (22).

L'épaisseur de la deuxième couche dépend généralement de la fonction de cette couche.

L'épaisseur de la deuxième couche peut aller de 10 µm à 5 mm, de préférence de 10 à 1000 µm.

Ainsi selon l'invention, des couches épaisses microstructurées peuvent être préparées sur un substrat en obtenant une excellente adhérence sur celui-ci et sans qu'aucun traitement d'activation ou préparation du substrat, ni de la première couche ne soit réalisé.

L'adhérence entre la première et la deuxième couches (21, 22) se fait chimiquement et est la résultante de l'état thermocinétique des particules de la deuxième couche (22) qui est lié aux paramètres de projection. Cette adhérence se fait également par pénétration des particules du deuxième matériau dans la couche (21), et donc par ancrage mécanique.

Il est à noter, en outre, qu'aucun post traitement, c'est-à-dire aucun traitement postérieur au dépôt, n'est généralement nécessaire entre les couches et sur le revêtement final.

Autrement dit, on ne réalise généralement aucun post traitement sur le première couche à l'issue de son dépôt, ni sur la deuxième couche à l'issue de son dépôt.

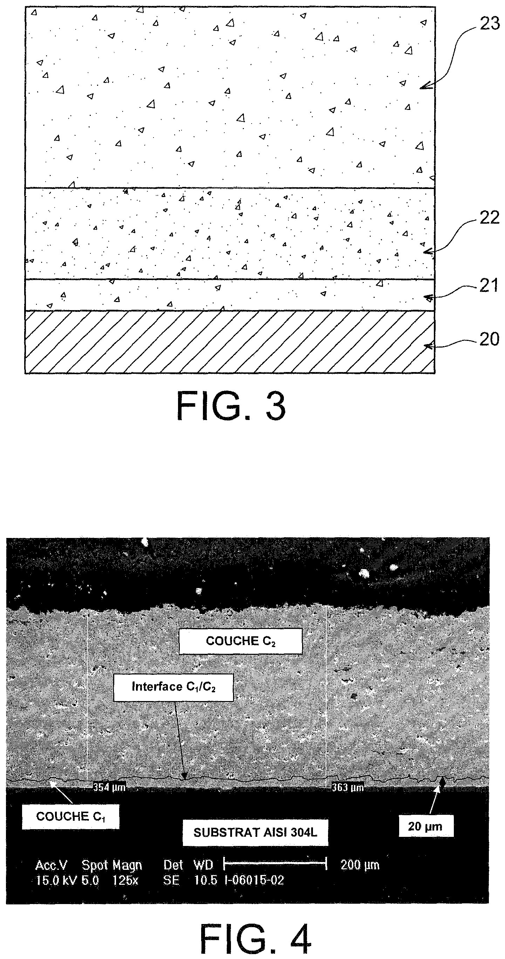

Afin de mieux contrôler les propriétés structurales et donc physico-chimiques du système multicouche, il est possible de déposer une couche supplémentaire ou troisième couche (23), comme cela est montré sur la figure 3. Cette troisième couche peut être appelée couche d'ajustement des propriétés du multicouche.

Cette couche peut être nanostructurée ou finement structurée ou microstructurée, les deux couches inférieures servant de couche d'adhérence à cette troisième couche.

Le troisième matériau qui constitue cette couche (23) pourra être identique en composition au deuxième matériau ou de structure cristallographique proche de celle du deuxième matériau, ou de comportement thermomécanique proche de celui du deuxième matériau, notamment suivant les besoins industriels. En choisissant ainsi le deuxième matériau de la couche (22) micrométrique et le troisième matériau de la couche (23), on assure un maximum de cohésion entre les deux couches (22) et (23).

En d'autres termes, avantageusement, la troisième couche a la même composition (chimique) que la deuxième couche.

Autrement dit, avantageusement, la deuxième couche et la troisième couche sont en un même matériau.

Les avantages procurés par le choix d'un troisième matériau ayant une composition identique au deuxième matériau sont analogues à ceux obtenus par le choix d'un deuxième matériau ayant une composition identique au premier matériau et ont déjà été exposés plus haut. Notamment, lorsque le troisième matériau est identique au deuxième matériau, il n'y pas de problèmes d'oxydation entre la deuxième et la troisième couches.

Avantageusement, le premier matériau, le deuxième matériau et le troisième matériau ont tous trois une composition identique, la même composition (chimique).

Autrement dit, avantageusement, les trois couches sont en un même matériau, par exemple en une même céramique.

Lorsque le matériau des trois couches a avantageusement la même composition, il n'existe pas de gradient de composition dans le revêtement.

Le troisième matériau qui constitue la troisième couche (23) du revêtement préparé par le procédé selon l'invention est, de même que le premier matériau et le deuxième matériau, généralement choisi parmi les céramiques, de préférence parmi les oxyde(s) métalliques, tels que la zircone, l'alumine, la silice, l'oxyde d'hafnium (hafnine), le dioxyde de titane etc., ces particules peuvent être denses ou poreuses.

Cette troisième couche (23), lorsqu'il s'agit d'une couche microstructurée est généralement déposée par un procédé de projection thermique « classique » par voie sèche de manière analogue à la deuxième couche (22).

Cette troisième couche (23), lorsqu'il s'agit d'une couche nanostructurée ou finement structurée, est généralement déposée par un procédé de projection thermique par voie liquide de manière analogue à la première couche (21).

Les paramètres de projection du procédé de projection thermique mis en oeuvre pour le dépôt de la deuxième couche seront également adaptés au troisième matériau (23).

L'épaisseur de la troisième couche dépend généralement de la fonction de cette couche.

L'épaisseur de la troisième couche peut aller de 10 µm à 5 mm, de préférence de 10 µm à 1 mm dans le cas d'une couche microstructurée, et de 1 µm à 100 µm, de préférence 10 µm à 60 µm, dans le cas d'une couche nanostructurée ou finement structurée.

La deuxième couche (22) et la troisième couche (23) du revêtement ont généralement des propriétés de fonctions différentes.

Ainsi, la deuxième couche (22) peut être définie comme une couche fonctionnelle qui va conférer une fonction améliorée à la pièce, substrat revêtu. Par exemple, cette deuxième couche (22) peut être une couche de barrière thermique ou de barrière électrique.

La troisième couche (23) qui, on l'a vu, peut être définie comme une couche d'ajustement des propriétés du revêtement multicouche, est la couche externe qui communique au revêtement des propriétés essentielles vis-à-vis de l'environnement.

Par exemple, la troisième couche peut donner des propriétés d'étanchéité aux gaz extérieurs, des propriétés anti-corrosion (par exemple vis-à-vis des acides), des propriétés anti-usure, des propriétés de barrière thermique. En particulier, si la troisième couche est une couche nanostructurée ou finement structurée, elle présentera moins de porosité, et elle sera donc plus étanche notamment vis-à-vis des gaz.

Il est à noter, de nouveau, qu'aucun post-traitement n'est généralement nécessaire entre les trois couches et sur le revêtement final.

Autrement dit, on ne réalise généralement aucun post-traitement sur la deuxième couche, à l'issue de son dépôt, ni sur la troisième couche, à l'issue de son dépôt.

Le procédé selon l'invention permet de préparer des revêtements qui présentent des épaisseurs variables, mais il s'avère particulièrement avantageux pour la préparation de revêtements épais, à savoir généralement d'une épaisseur supérieure ou égale à 100 µm, de préférence d'une épaisseur supérieure ou égale à 150 µm, qui, grâce au procédé selon l'invention, présentent une excellente adhérence et une excellente cohésion.

Le revêtement final qui est essentiellement un revêtement microstructuré micrométrique, a ainsi une épaisseur généralement de 100 µm à 10 mm, de préférence de 150 µm à 10 mm, de préférence encore de 150 µm à 1 mm.

Un tel revêtement trouve notamment son application dans les industries aéronautiques, spatiales, navales, et nucléaires.

On a montré plus haut que l'invention met à profit l'utilisation d'une première couche nanostructurée ou finement structurée réalisée par projection thermique comme couche d'adhérence pour des revêtements, de préférence des revêtements épais réalisés de façon classique par projection thermique et nécessitant habituellement une adhérence mécanique. Il n'est plus nécessaire de réaliser de préparation préalable afin d'augmenter la rugosité de surface pour favoriser un ancrage mécanique d'un revêtement épais.

Le procédé selon l'invention ne se limite pas à la préparation de barrières thermiques mais peut convenir à la préparation de tout revêtement.

L'invention va maintenant être décrite en référence à l'exemple suivant, donné à titre illustratif et non limitatif.

### EXEMPLE :

Cet exemple illustre la réalisation d'un système bi-couche sur un substrat AISI 304L de 50x50 mm² brut d'usinage (Rₐ ~0,5 µm) :

### Etape 1 Nettoyage de l'échantillon

- Bain d'acétone (30 minutes).
- Bain d'éthanol activé aux ultrasons.

### Etape 2 Réalisation de la couche C₁ (21)

Revêtement nanostructuré d'YSZ (zircone stabilisée à l'yttrine) réalisé par projection plasma en voie liquide :
- Taille des particules en suspension : 30-60 nm.
- Taux de charge de la suspension : 6% en masse.
- Débit de suspension : 70 g/min.
- Type de torche à plasma : Sulzer-Metco^{®}, type F4.
- Vitesse relative torche/substrat : 1,5 m/s.
- Distance de projection : 40 mm.
- Mélange plasmagène et débit des gaz utilisés : Ar/He/H₂, 45/45/3 NL/min.
- Puissance utile de la torche : ~ 28 kW.
- Température de préchauffage du substrat : 250°C.
- Durée de la projection : 15 min.

### Etape 3 Réalisation de la couche C₂ (22)

Revêtement microstructuré d'YSZ (zircone stabilisée à l'yttrine) réalisé par projection plasma classique (voie sèche) :
- Taille des particules : 22-45 µm.
- Composition chimique de la poudre : idem couche C₁ (21) .
- Débit de poudre : 20 g/min.
- Distance de projection : 150 mm.
- Mélange plasmagène : Ar/He/H₂.
- Température de préchauffage de la couche C₁ : 250°C.
- Temps de projection : 10 min.

L'épaisseur de la première couche C₁ (21) est d'environ 20 µm, et l'épaisseur totale du revêtement est d'environ 350 à 360 µm, par exemple 354 µm ou 363 µm comme montré sur la Figure 4.

### Observation de la microstructure obtenue

La Figure 4 est une image obtenue par microscope électronique à balayage qui montre les différentes couches déposées comme décrit plus haut sur le substrat.

On constate sur la photographie de la Figure 4 que l'interface entre la première couche C₁ (21) et la deuxième couche C₂ (22) est à peine visible, ce qui montre que la cohérence entre ces deux couches est excellente.

### RÉFÉRENCES

[1] A. Proner, Revêtements par projection thermique, Techniques de l'ingénieur, 1999, M 1645, pp 1-20.
[2] L. Pawlowski, The science and Engineering of Thermal Spray Coatings, John Wiley & Sons, New York, 1995.
[3] M.G. Nicholas and K.T. Scutt, Characterisation of grit blasted surface, Surfacing J., 12 (1981) 5.
[4] M. Mellali, A. Grimaud et P. Fauchais, Parameters controlling the sand blasting of substrates for plasma spraying, Proc. 7th Thermal Spray Conf., 20-24 June 1994, Boston, ASM International, Orlando FL, 1994.
[5] J. Wigren, Technical note: Grit blasting as surface preparation before plasma spraying, Surface and Coatings Technology, 34 (1988) 101-108.
[6] F. Elbing, N. Anagreh, L. Dorn, E. Uhlmann, Dry ice blasting as pretreatment of aluminium surfaces to improve the adhesive strength of aluminium bonding joint, International Journal of Adhésion & Adhesives, 23 (2003) 69-79.
[7] T. A. Taylor, Surface roughening of metallic substrates by high pressure pure waterjet, Surface and Coatings Technology, 76-77(1995)95-100.
[8] J. K. Knapp, T. A. Taylor, Waterjet roughened surface analysis and bond strength, Surface and Coatings Technology, 86-87 (1996) 22-27.
[9] J. Patru, Modélisation du développement des contraintes résiduelles au sein de dépôts plasma de zircone et d'acier, Thèse de Doctorat, Université de Limoges, 2005.
[10] US-A-5,688,564, *Process for the preparation and coating of a surface*, C. Coddet & al., INST Polytechnique de Sevenans, IREPA LASER, 1997.
[11] EP-A-0580534, FR-A-2693925, DE-A-69310039, CA-A-2101004, Procédé de préparation et de revêtement de surface et dispositif pour la mise en oeuvre dudit procédé, C. Coddet & al., Institut Polytechnique de Sevenans, IREPA LASER, 1994.
[12] T. Lee, J. Deng, Mechanical surface treatments of electro-discharge machined (EDMed) ceramic composite for improved strength and reliability, Journal of the European Ceramic Society, 22, 2002, 545-550.
[13] M. Verdier, Caractérisation et développement du procédé PROTAL®, Thèse de Doctorat, Université de Franche-Comté, 2001.
[14] H Li, S. Costil, S-H. Deng, H-L. Liao, C. Coddet, V. Ji, W-J. Huang, Benefit of surface oxide removal on thermal spray coating adhésion using the PROTAL® process, Proc. International Thermal Spray Conference, May 15-18, 2006, Seattle, Washington, USA.
[15] M. Verdier, G. Montavon, S. Costil, C. Coddet, On the adhésion mechanisms of thermal spray deposits manufactured while implementing the PROTAL® process, Thermal Spray 2001: New Surfaces for a New Millennium, ASM International, Materials Park, Ohio, USA, 2001.
[16] O. Tingaud, A. Bacciochini, G. Montavon, A. Denoirjean, P. Fauchais, Suspension DC plasma spraying of thick finely-structured ceramic coatings : Process manufacturing mechanisms, Surface and Coatings Technology, Volume 203, Issue 15, 2009, 2157-2161.
[17] WO-A1-2006/043006, Revêtement nanostructuré et procédé de revêtement, Wittmann-Tenèze & al., Commissariat à l'Energie Atomique, 2006
[18] WO-A1-2007/090707, Thermal spraying method using a colloidal suspension, R. Sieget & al., Forschungszentrum Juelich GmbH, 2007.
[19] WO-A1-96/06957, Suspension plasma spray deposition, F. Gitzhofer & al., University of Sherbrooke, 1996.
[20] US-A-2008/072790, WO-A-2008/036887, Methods of making a finely structured thermally sprayed coating, J. Roth & al., Inframat Corp., 2008.
[21] K. Wittmann-Ténèze, Etude de l'élaboration de couches minces par projection plasma, Thèse de Doctorat, Université de Limoges, 2001.
[22] C. Delbos, Contribution à la compréhension de l'injection par voie liquide de céramiques (YSZ, Pérovskite,...) ou de métaux (Ni,...) dans un plasma d'arc soufflé afin d'élaborer des dépôts finement structurés pour SOFCs, Thèse de Doctorat, Université de Limoges, 2004.
[23] L. Pawlowski, Suspension and solution thermal spray coatings, Surface and Coatings Technology, 203, 2009, 2807-2829.
[24] S.O. Chwo, D. Ricin, F.L. Toma, G. Bertrand, H. Liao, C. Coddet, A. Ohmori, Microstructure and mechanical properties of plasma sprayed nanostructured TiO2-Al composite coatings, Surface and Coatings Technology, 194 (2005), 215-224.
[25] O. Tingaud, Elaboration de dépôts à gradients de propriétés par projection plasma de suspension de particules sub-micrométriques, Thèse de Doctorat, Université de Limoges, 2008.
[26] A. Bacciochini, G. Montavon, A. Denoirjean, P. Fauchais, Porous architecture of SPS Thick Y-PSZ coatings structured at the sub-micrometer scale, Proc. International Thermal Spray Conference, May 4-7, 2009, Las Vegas, Nevada, USA.
[27] R. Etchart-Salas, Projection par plasma d'arc de particules submicroniques en suspension. Approche expérimentale et analytique des phénomènes impliqués dans la reproductibilité et la qualité des dépôts, Thèse de Doctorat, Université de Limoges, 2007.
[28] On the surface preparation of nickel superalloys before CoNiCrAIY deposition by thermal spray, Surface and Coatings Technology, 184 (2004) 156-162.
[29] US-A-2008/069959, Thermal barrier composition, a superalloy machine part provided with a coating having such a composition, a ceramic coating, and a method of fabricating the coating, B. Leclercq & al., SNECMA, 2008.
[30] US-A-3,486,927, Process for depositing a protective aluminium coating on metal articles, G.M.C. Gauje, SNECMA, 1969.
[31] JP-A-2007 254883, Method of deposing thermal barrier by plasma torch, F. Braillard, SNECMA, 2007.
[32] US-A-2004/028938, Method of making a protective coating forming a thermal barrier with a bonding underlayer on a superalloy substrate, and a part obtained thereby, B. Saint Ramoud & al., SNECMA MOTEURS, 2004.
[33] US-A-2002/037220, Method of making a protective coating forming a thermal barrier with a bonding underlayer on a superalloy substrate, and a part obtained thereby, B. Saint Ramond & al., SNECMA MOTEURS, 2002.
[34] EP-A-0825275, Procédé de réalisation d'un apport sur une pièce en superalliage à base de nickel ou de cobalt, M.-C. Dumez & al., SNECMA SERVICES, 1998.
[35] US-A-5,476,723, Coated superalloy component, C. PAGNON, SNECMA, 1995.
[36] IL-A-105821, Process for forming a coating on a superalloy component, and the coated component produced thereby, SNECMA, 1997.
[37] US-A-6,555,179, Aluminizing process for plasma-sprayed bond coat of a thermal barrier coating system, J.D. Reeves & al., Gen Electric, 2003.
[38] JP-A-2005 126750, Thermal spraying system, I. Yukio, Yamada Kinzokn Boshoku KK; Kyushu Electric Power; I & F Co Ltd, 2005.
[39] EP-A-1980645, Method for applying a multi-layer coating to workpieces and/or work materials, R. Stein & al., 2008.
[40] TW-A-422889, Process for depositing a bond coat for a thermal barrier coating system, Zheng Xiaoci Maggie, Gen Electric, 2001.
[41] JP-A-7 173635, Method for surface treatment of metal, H. Suzuki & al., Suzuki Motor Co, 1995.
[42] JP-A-62 050455, Coating method with ceramic, Y. Takahashi & al., Cosmo Co Ltd, 1987.
[43] US-A-2009/142493, Method of Electrochemically Fabricating Multilayer Structures Having Improved Interlayer Adhesion, A. Cohen & al., 2009.
[44] JP-A-2008/231452, Method for depositing multilayer coating film, S. Kiyozawa & al., Nippon Paint Co Ltd, 2008.
[45] US-A-4,335,190, Thermal barrier coating system having improved adhesion, R.C. Bill & al., NASA, 1982.
[46] U. Schultz, R. Fritscher, A. Ebach-Stahl, Cyclic behaviour of EB-PVD thermal barrier coating systems with modified bond coats, Surface and Coatings Technology, 203 (2008), 449-455.

## Revendications

1. Procédé de préparation d'un revêtement multicouche épais d'une épaisseur supérieure ou égale à 100 µm, de préférence d'une épaisseur supérieure ou égale à 150 µm, sur une surface d'un substrat (20) en un matériau choisi parmi les métaux et les alliages métalliques, par au moins un procédé de projection thermique, dans lequel on réalise les étapes successives suivantes :
a) on dépose sur la surface du substrat (20) une première couche (21) nanostructurée ou finement structurée d'un premier matériau par un procédé de projection thermique par voie liquide ; la surface du substrat (20) n'ayant subi, préalablement au dépôt de la première couche (21) nanostructurée ou finement structurée, aucun traitement de préparation ou d'activation autre qu'un traitement de nettoyage éventuel ;
b) on dépose sur la première couche (21) nanostructurée ou finement structurée une deuxième couche (22) microstructurée d'un deuxième matériau par un procédé de projection thermique par voie sèche ;
dans lequel les premier et deuxième matériaux sont choisis indépendamment les uns des autres, parmi les céramiques, de préférence les céramiques oxydes, les métaux et les cermets ;
et dans lequel le deuxième matériau a la même composition que le premier matériau et/ou le deuxième matériau a une structure cristallographique proche de celle du premier matériau, et/ou le deuxième matériau a un comportement thermomécanique proche de celui du premier matériau.

2. Procédé selon la revendication 1, dans lequel, lors de l'étape a), le procédé de projection thermique utilise une suspension de particules nanométriques ou submicroniques du premier matériau.

3. Procédé selon la revendication 1, dans lequel, lors de l'étape a), le procédé de projection thermique utilise une solution de réactifs précurseurs du premier matériau.

4. Procédé selon l'une quelconque des revendications précédentes, dans lequel l'épaisseur de la première couche nanostructurée ou finement structurée du premier matériau déposée sur la surface du substrat est supérieure à l'épaisseur de ladite première couche dans le revêtement multicouche final obtenu à l'issue du procédé.

5. Procédé selon l'une quelconque des revendications 1 à 4, dans lequel lors de l'étape b) le procédé de projection thermique utilise une poudre sèche de particules micrométriques du deuxième matériau.

6. Procédé selon l'une quelconque des revendications précédentes, dans lequel après l'étape b) on réalise une étape c) au cours de laquelle on dépose une troisième couche (23) microstructurée ou nanostructurée ou finement structurée d'un troisième matériau sur la deuxième couche (22) microstructurée du deuxième matériau par un procédé de projection thermique.

7. Procédé selon la revendication 6, dans lequel le troisième matériau a la même composition que le deuxième matériau et/ou le troisième matériau a une structure cristallographique proche de celle du deuxième matériau, et/ou le troisième matériau a un comportement thermomécanique proche de celui du deuxième matériau.

8. Procédé selon l'une quelconque des revendications précédentes, dans lequel le procédé de projection thermique par voie liquide utilisé dans l'étape a) est choisi parmi les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence.

9. Procédé selon l'une quelconque des revendications précédentes, dans lequel le procédé de projection thermique utilisé dans l'étape b) est un procédé de projection thermique par voie sèche choisi parmi les procédés utilisés pour l'étape a), à savoir les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence; et, en outre, parmi le procédé de projection flamme-poudre, et le procédé de projection arc-fil.

10. Procédé selon la revendication 6, dans lequel le procédé de projection thermique utilisé dans l'étape c) est soit un procédé de projection thermique par voie liquide choisi parmi les procédés de projection thermique par voie liquide utilisés pour l'étape a), à savoir les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence, dans le cas ou la couche déposée lors de l'étape c) est une couche nanostructurée ou finement structurée; ou bien un procédé de projection thermique par voie sèche choisi parmi les procédés de projection thermique par voie sèche utilisés pour l'étape b), à savoir les procédés de projection supersonique ou hypersonique dénommés « HVOF » c'est-à-dire « High Velocity Oxy-Fuel » ou « HVAF » c'est-à-dire « High Velocity Air Fuel », le procédé de projection par canon à détonation dénommé procédé « D-GUN », et les procédés de projection par plasma, par exemple par plasma d'arc soufflé ou radio-fréquence; et en outre parmi le procédé de projection flamme-poudre, et le procédé de projection arc-fil, dans le cas où la couche déposée lors de l'étape c) est une couche microstructurée.

11. Procédé selon l'une quelconque des revendications précédentes, dans lequel préalablement à l'étape a) on préchauffe le substrat et/ou préalablement à l'étape b), on préchauffe la première couche.

12. Procédé selon l'une quelconque des revendications 8 à 11, dans lequel le troisième matériau est choisi indépendamment du premier et du deuxième matériaux, parmi les céramiques, de préférence les céramiques oxydes, les métaux et les cermets.

## Patentansprüche

1. Verfahren zur Herstellung einer dicken mehrlagigen Beschichtung mit einer Dicke größer oder gleich 100 µm, vorzugweise einer Dicke größer oder gleich 150 µm, auf einer Oberfläche eines Substrats (20) aus einem unter den Metallen und den Metallegierungen ausgewählten Material, durch wenigstens eine thermische Spritzmethode, bei dem man die folgenden aufeinanderfolgenden Schritte ausführt:
a) man scheidet , durch ein flüssiges thermisches Spritzverfahren, auf der Oberfläche des Substrats (20) eine erste nanostrukturierte oder feinstrukturierte Schicht (21) aus einem ersten Material ab; wobei die Oberfläche des Substrats (20) keiner der Abscheidung der ersten nanostrukturierten oder feinstrukturierten Schicht (21) vorausgehenden Vorbereitungs- oder Aktivierungsbehandlung, außer einer eventuellen Reinigungsbehandlung, unterzogen wurde ;
b) man scheidet, durch ein trockenes thermisches Spritzverfahren, auf der ersten nanostrukturierten oder feinstrukturierten Schicht (21) eine zweite mikrostrukturierte Schicht (22) aus einem zweiten Material ab ;
bei dem die ersten und zweiten Materialien unabhängig voneinander ausgewählt werden unter den Keramiken, insbesondere den Oxidkeramiken, den Metallen und den Cermets ;
und bei dem das zweite Material die gleiche Zusammensetzung wie das erste Material hat und/oder das zweite Material eine kristallografische Struktur nahe derjenigen des ersten Materials hat,
und/oder das zweite Material ein thermomechanisches Verhalten nahe demjenigen des ersten Materials hat.

2. Verfahren nach Anspruch 1, bei dem, während des Schritts a), das thermische Spritzverfahren eine Suspension von nanometrischen oder submikrometrischen Partikeln des ersten Materials verwendet.

3. Verfahren nach Anspruch 1, bei dem, während des Schritts a), das thermische Spritzverfahren eine Lösung von Vorläuferreagenzien des ersten Materials verwendet.

4. Verfahren nach einem der vorhergehenden Ansprüche, bei dem die Dicke der auf der Oberfläche des Substrats abgeschiedenen ersten nanostrukturierten oder feinstrukturierten Schicht des ersten Materials größer ist als die Dicke der genannten ersten Schicht bei der am Ende des Verfahrens erhaltenen endgültigen mehrlagigen Beschichtung.

5. Verfahren nach einem der Ansprüche 1 bis 4, bei dem während des Schritts b) das thermische Spritzverfahren ein trockenes Pulver aus mikrometrischen Partikeln des zweiten Materials verwendet.

6. Verfahren nach einem der vorhergehenden Ansprüche, bei dem man nach dem Schritt b) einen Schritt c) ausführt, in dessen Verlauf man auf der mikrostrukturierten zweiten Schicht (22) aus dem zweiten Material durch ein thermisches Spritzverfahren eine dritte mikrostrukturierte oder nanostrukturierte oder feinstrukturierte Schicht (23) aus einem dritten Material abscheidet.

7. Verfahren nach Anspruch 6, bei dem das dritte Material dieselbe Zusammensetzung wie das zweite Material hat, und/oder das dritte Material eine kristallografische Struktur nahe derjenigen des zweiten Materials hat, und/oder das dritte Material ein thermomechanisches Verhalten nahe demjenigen des zweiten Materials hat.

8. Verfahren nach einem der vorhergehenden Ansprüche, bei dem das in Schritt a) benutzte flüssige thermische Spritzverfahren ausgewählt wird unter den Überschall- oder Hyperschall-Spritzverfahren, genannt "HVOF" für "High Velocity Oxy-Fuel", oder "HVAF" für "High Velocity Air Fuel", dem Detonationskanonen-Spritzverfahren, genannt "D-GUN"-Verfahren, und den Plasmaspritzverfahren, zum Beispiel mittels geblasenem Plasmalichtbogen oder Radiofrequenzplasma.

9. Verfahren nach einem der vorhergehenden Ansprüche, bei dem das in Schritt b) benutzte thermische Spritzverfahren ein trockenes thermische Spritzverfahren ist, ausgewählt unter den für den Schritt a) verwendeten Verfahren, nämlich den Überschall- oder Hyperschall-Spritzverfahren, genannt "HVOF" für "High Velocity Oxy-Fuel", oder "HVAF" für "High Velocity Air Fuel", dem Detonationskanonen-Spritzverfahren, genannt "D-GUN"-Verfahren, und den Plasmaspritzverfahren, zum Beispiel mittels geblasenem Plasmalichtbogen oder Radiofrequenzplasma, und außerdem unter dem Pulverflammspritzverfahren und dem Lichtbogendrahtspritzverfahren.

10. Verfahren nach Anspruch 6, bei dem das in dem Schritt c) verwendete thermische Spritzverfahren entweder ein flüssiges thermisches Spritzverfahren ist, ausgewählt unter den in dem Schritt a) verwendeten flüssigen thermischen Spritzverfahren, nämlich den Überschall- oder Hyperschall-Spritzverfahren, genannt "HVOF" für "High Velocity Oxy-Fuel", oder "HVAF" für "High Velocity Air Fuel", dem Detonationskanonen-Spritzverfahren, genannt "D-GUN"-Verfahren, und den Plasmaspritzverfahren, zum Beispiel mittels geblasenem Plasmalichtbogen oder Radiofrequenzplasma, falls die während des Schritts c) abgeschiedene Schicht eine nanostrukturierte oder feinstrukturierte Schicht ist; oder ein trockenes thermisches Spritzverfahren ist, ausgewählt unter den für den Schritt b) verwendeten trockenen thermischen Spritzverfahren, nämlich den Überschall- oder Hyperschall-Spritzverfahren, genannt "HVOF" für "High Velocity Oxy-Fuel", oder "HVAF" für "High Velocity Air Fuel", dem Detonationskanonen-Spritzverfahren, genannt "D-GUN"-Verfahren, und den Plasmaspritzverfahren, zum Beispiel mittels geblasenem Plasmalichtbogen oder Radiofrequenzplasma, und außerdem unter dem Pulverflammspritzverfahren und dem Lichtbogendrahtspritzverfahren, falls die während des Schritts c) abgeschiedene Schicht eine mikrostrukturierte Schicht ist.

11. Verfahren nach einem der vorhergehenden Ansprüche, bei dem man vor dem Schritt a) das Substrat vorwärmt bzw. vorerhitzt und/oder vor dem Schritt b) die erste Schicht vorwärmt bzw. vorerhitzt.

12. Verfahren nach einem der Ansprüche 8 bis 11, bei dem das dritte Material, unabhängig von dem ersten und dem zweiten Material, ausgewählt wird unter den Keramiken, vorzugsweise den Oxidkeramiken, den Metallen und den Cermets.

## Claims

1. A method for preparing a thick multilayer coating with a thickness greater than or equal to 100 µm, preferably with a thickness greater than or equal to 150 µm, on a surface of a substrate (20) made of a material selected from metals and metal alloys, by means of at least one thermal spraying method, in which the following successive steps are carried out:
a) a first nanostructured or finely structured layer (21) of a first material is deposited on the surface of the substrate (20) by means of a thermal spraying method via a liquid route; the surface of the substrate (20) not having been subject, prior to the deposition of the first nanostructured or finely structured layer (21), to any preparation or activation treatment other than an optional cleaning treatment;
b) a second microstructured layer (22) of a second material is deposited on the first nanostructured or finely structured layer (21) by means of a thermal spraying method via a dry route;
wherein the first and the second materials are selected independently of each other from ceramics, preferably oxide ceramics, metals and cermets;
and wherein the second material has the same composition as the first material and/or the second material has a crystallographic structure close to that of the first material, and/or the second material has a thermomechanical behavior close to that of the first material.

2. The method according to claim 1, wherein, during step a) the thermal spraying method uses a suspension of nanometric or submicron particles of the first material.

3. The method according to claim 1, wherein, during step a), the thermal spraying method uses a solution of reagents precursors of the first material.

4. The method according to any one of the preceding claims, wherein the thickness of the first nanostructured or finely structured layer of the first material deposited on the surface of the substrate is greater than the thickness of said first layer in the final multilayer coating obtained at the end of the method.

5. The method according to any one of claims 1 to 4, wherein, during step b) the thermal spraying method uses a dry powder of micrometric particles of the second material.

6. The method according to any one of the preceding claims, wherein after step b), a step c) is carried out during which a third microstructured or nanostructured or finely structured layer (23) of a third material is deposited on the second microstructured layer (22) of the second material by means of a thermal spraying method.

7. The method according to claim 6, wherein the third material has the same composition as the second material and/or the third material has a crystallographic structure close to that of the second material and/or the third material has a thermomechanical behavior close to that of the second material.

8. The method according to any one of the preceding claims wherein the thermal spraying method via a liquid route used in step a) is selected from supersonic or hypersonic spraying methods designated as « HVOF » i.e. « High Velocity Oxy-Fuel » or « HVAF » i.e. « High Velocity Air Fuel » methods, the detonation gun spraying method called « D-GUN » method, and the plasma spraying methods for example with a blown arc or radiofrequency plasma.

9. The method according to any one of the preceding claims, wherein the thermal spraying method used in step b) is a thermal spraying method via a dry route selected from the methods used for step a), i.e. the supersonic or hypersonic spraying methods designated as « HVOF » i.e. « High Velocity Oxy-Fuel » or « HVAF » i.e. « High Velocity Air Fuel » methods, the detonation gun spraying method called « D-GUN » method, and the plasma spraying methods, for example with a blown arc or radiofrequency plasma; and further from the flame-powder spraying method and the arc-wire spraying method.

10. The method according to claim 6, wherein the thermal spraying method used in step c) is either a thermal spraying method via a liquid route selected from the thermal spraying methods via a liquid route used for step a), i.e. the supersonic or hypersonic spraying methods designated as « HVOF » i.e. « High Velocity Oxy-Fuel » or « HVAF » i.e. « High Velocity Air Fuel » methods, the detonation gun spraying method called « D-GUN » method, and the plasma spraying methods, for example with a blown arc or radiofrequency plasma, in the case when the layer deposited during step c) is a nanostructured or finely structured layer; or else a thermal spraying method via a dry route selected from the thermal spraying methods via a dry route used for step b), i.e. the supersonic or hypersonic spraying methods designated as « HVOF » i.e. « High Velocity Oxy-Fuel » or « HVAF » i.e. « High Velocity Air Fuel » methods, the detonation gun spraying method called « D-GUN » method, and the plasma spraying methods, for example with a blown arc or radiofrequency plasma; and further from the flame-powder spraying method and the arc-wire spraying method, in the case when the deposited layer during step c) is a microstructured layer.

11. The method according to any one of the preceding claims, wherein prior to step a), the substrate is preheated and/or prior to step b), the first layer is preheated.

12. The method according to any one of claims 8 to 11, wherein the third material is selected independently from the first and the second materials, from ceramics, preferably oxide ceramics, metals and cermets.
